# EUROPÄISCHE PATENTSCHRIFT

(11) **EP 3 384 768 B1**
(45) Veröffentlichungstag und Bekanntmachung des Hinweises auf die Patenterteilung: **24.02.2021**
(21) Anmeldenummer: 18164641.5
(22) Anmeldetag: 28.03.2018
(51) Int. Cl.: A01M 7/00

(54) **SCHWINGUNGSTILGUNG EINES VERTEILERGESTÄNGES EINER LANDWIRTSCHAFTLICHEN VERTEILMASCHINE**
VIBRATION DAMPER OF A DISTRIBUTOR SYSTEM OF RODS ON AN AGRICULTURAL SPREADER
AMORTISSEMENT DES VIBRATIONS D'UNE TRINGLERIE DE DISTRIBUTION D'UNE MACHINE D'ÉPANDAGE AGRICOLE

(30) Priorität: 29.03.2017 DE 102017205291
(43) Veröffentlichungstag der Anmeldung: 10.10.2018
(73) Patentinhaber: Deere & Company, Moline, IL 61265 (US)
(72) Erfinder: Gresch, Valentin, 68163 Mannheim (DE); Jung, Benedikt, 68163 Mannheim (DE); Kremmer, Martin, 68163 Mannheim (DE)
(74) Vertreter: Holst, Sönke

(56) Entgegenhaltungen:
- EP-A1- 3 132 682
- DE-A1-102011 108 480
- DE-A1-102015 101 032

## Beschreibung

Die Erfindung betrifft eine landwirtschaftliche Verteilmaschine mit einem Verteilergestänge, einem sich auf dem Boden abstützenden, in eine Vorwärtsrichtung in Bewegung setzbaren Fahrgestell, an dem das Verteilergestänge befestigt ist, wobei das Verteilergestänge eine quer zur Vorwärtsrichtung gemessene Breite aufweist, die ein Vielfaches der Transportbreite der Verteilmaschine ist, und einer elektronischen Steuerung, die betreibbar ist, einen die Vortriebsgeschwindigkeit und/oder Fahrtrichtung des Fahrgestells und/oder des Verteilergestänges beeinflussenden Aktor im Sinne einer Minderung einer in Vorwärtsrichtung gerichteten Schwingung des Verteilergestänges anzusteuern, sowie ein entsprechendes Verfahren.

### Stand der Technik

Feldspritzen werden in der Landwirtschaft verwendet, um zur Düngung eines Feldes oder zur Bekämpfung dort vorhandener, unerwünschter Lebewesen (wie Wildkräuter, Pilze oder Insekten) Spritzmittel auf einem Feld zu verteilen. Sie sind als an ein Trägerfahrzeug angebaute oder aufgesattelte, selbstfahrende oder gezogene Ausführungsformen verfügbar. Um eine hinreichende Arbeitsbreite von einigen 10 m zu erzielen, sind sie mit Spritzdüsen tragenden Gestängen ausgestattet, die sich zwischen einer eingefalteten Transportposition für eine Straßenfahrt und einer ausgefahrenen Arbeitsposition für den Feldbetrieb verstellen lassen. Die Gestänge sind üblicherweise in vertikaler Richtung relativ steif gestaltet, um einen konstanten Abstand zwischen dem Boden und den Spritzdüsen und somit ein Einhalten der gewünschten Ausbringraten zu gewährleisten, während sie aus Gewichts- und Kostengründen in Vorwärtsrichtung weniger steif gestaltet werden. Das hat jedoch zur nachteiligen Folge, dass die Gestänge in Vorwärtsrichtung in Schwingbewegungen geraten können, z.B. wenn die Feldspritze oder ein sie tragendes Fahrzeug verzögert oder beschleunigt oder um eine Kurve fährt. Die Amplituden derartiger Schwingbewegungen können in der Größenordnung von 1 m oder mehr liegen, was zur unerwünschten Folge hat, dass die gewünschten Ausbringraten lokal nicht eingehalten werden.

Im Stand der Technik wurden einige Maßnahmen vorgeschlagen, um derartige Schwingbewegungen durch eine elektronische Steuerung zur erfassen und zu bekämpfen.

So schlägt die DE 100 54 285 A1 vor, die Bewegungen des Gestänges in Vorwärtsrichtung zu erfassen und durch gegensinnig wirkende Aktoren zu tilgen, welche im Abstand von der Längsachse der Feldspritze an den beiden (links und rechts der Längsachse angeordneten) Gestängehälften angreifen und anderen Endes am Gestell der Feldspritze angelenkt sind. Die DE 10 2015 113 721 A1 schlägt zur aktiven Schwingungstilgung vor, das Gestänge insgesamt in Vorwärtsrichtung gegenüber dem Gestell der Feldspritze zu bewegen, um die Auswirkungen linearer Verzögerungen oder Beschleunigungen der Feldspritze auf das Gestänge zu vermindern, während in der DE 10 2015 204 992 B3 vorgeschlagen wird, die Schwingung des Gestänges durch Luft ausstoßende Düsen zu tilgen, die am Gestänge angebracht sind.

Weiterhin schlägt die DE 10 2008 007 312 A1 vor, an den äußeren Enden der Gestängehälften jeweils einen Schwingungstilger anzubringen, der sich aus einer Masse und einer Feder zusammensetzt. Die Masse wird nicht aktiv angetrieben und soll selbsttätig die Schwingbewegungen des Gestänges auslöschen.

Die EP 2 526 755 A1, EP 2 589 289 A2, EP 2 835 050 A1 und die EP 2 829 177 A1 schlagen vor, innerhalb des Gestänges Dämpfungselemente anzubringen, deren Dämpfungseigenschaften in Abhängigkeit von der Bewegungsart der Feldspritze veränderbar sind.

Die als gattungsbildend angesehene EP 3 132 682 A1 schlägt vor, zukünftige Bewegungen der Feldspritze vorausschauend zu erkennen und beispielsweise beim Befahren von Kurven die Vortriebsgeschwindigkeit der Feldspritze möglichst sanft zu vermindern oder bei linearen Beschleunigungen oder Verzögerungen zu begrenzen, um die unerwünschten Schwingungen zu vermindern. Bei einem aktiv verstellbaren Gestänge kann vor einer Kurvenfahrt auch eine Vorbeschleunigung des Gestänges durchgeführt werden, sodass seine Beschleunigung um die Hochachse bei der tatsächlichen Kurvenfahrt vermindert wird.

Die DE 10 2014 203 005 B3 schlägt vor, einen Aktor zur Verstellung eines höhenverstellbaren oder um eine in Vorwärtsrichtung verlaufende Achse drehbaren Gestänges einer Feldspritze auf einen Verstellbefehl hin mit einem ersten Signal zu beaufschlagen und anschließend mit einem zweiten Signal, das dazu führt, das die durch das erste Signal im Gestänge induzierte Schwingung wieder ausgelöscht wird. Diese Vorgehensweise lässt sich auf das hier vorliegende Problem nicht übertragen, da die unerwünschte Schwingung des Gestänges nicht durch Verstellbefehle an einen das Gestänge bewegenden Aktor, sondern durch die Beschleunigung der Feldspritze ausgelöst wird.

### Aufgabe

Die im Stand der Technik bekannten Maßnahmen zur Schwingungstilgung umfassen demnach aktive Elemente, die (direkt oder über die Feldspritze) auf das Gestänge mechanisch einwirken (DE 100 54 285 A1, DE 10 2015 113 721 A1, DE 10 2015 204 992 B3 und EP 3 132 682 A1), passive Schwingungsdämpfer (DE 10 2008 007 312 A1, EP 2 526 755 A1, EP 2 589 289 A2, EP 2 835 050 A1 und EP 2 829 177 A1) und eine Begrenzung der linearen Beschleunigung der Feldspritze (EP 3 132 682 A1) bzw. des Gestänges (DE 10 2015 113 721 A1). Die aktiven und passiven Elemente zur Schwingungsdämpfung bedingen einen relativ hohen Aufwand, während die Begrenzung der linearen Beschleunigung der Feldspritze oder des Gestänges kaum dazu ausreichen wird, die Schwingungen des Gestänges wirksam auszulöschen.

Die der Erfindung zu Grunde liegende Aufgabe wird darin gesehen, eine landwirtschaftliche Verteilmaschine mit einem Gestänge und ein entsprechendes Verfahren bereitzustellen, bei welcher die erwähnten Nachteile nicht oder in vermindertem Maße auftreten.

### Lösung

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine landwirtschaftliche Verteilmaschine umfasst:
ein Verteilergestänge,
ein sich auf dem Boden abstützendes, in eine Vorwärtsrichtung in Bewegung setzbares Fahrgestell, an dem das Verteilergestänge befestigt ist, wobei das Verteilergestänge eine quer zur Vorwärtsrichtung gemessene Breite aufweist, die ein Vielfaches der Transportbreite der Verteilmaschine ist, und
eine elektronische Steuerung, die betreibbar ist, einen die Vortriebsgeschwindigkeit und/oder Fahrtrichtung des Fahrgestells und/oder des Verteilergestänges beeinflussenden Aktor im Sinne einer Minderung einer in Vorwärtsrichtung gerichteten Schwingung des Verteilergestänges anzusteuern,
wobei die Steuerung eingerichtet ist, den Aktor in Reaktion auf eine erfasste oder erwartete Schwingung des Verteilergestänges derart anzusteuern, dass durch die resultierende Geschwindigkeitsänderung und/oder Fahrtrichtungsänderung des Fahrgestells und/oder Verteilergestänges eine zur erfassten oder erwarteten Schwingung des Verteilergestänges gegenphasige Schwingung in dem Verteilergestänge induziert wird, die zur Verminderung oder Auslöschung der Schwingung des Verteilergestänges führt.

Mit anderen Worten wird durch eine elektronische Steuereinrichtung ein Aktor kontrolliert, welcher die Vortriebsgeschwindigkeit und/oder Fahrtrichtung des Fahrgestells und/oder des Verteilergestänges vorgibt. Der Aktor kann somit die Vortriebsgeschwindigkeit des Verteilergestänges durch Verstellung der Vortriebsgeschwindigkeit des Fahrgestells (und somit des starr oder beweglich, d.h. in Vorwärtsrichtung verschiebbar und/oder um die Hochachse drehbar am Fahrgestell angebrachten Verteilergestänges) und/oder durch Verstellung der Position des Verteilergestänges gegenüber dem Fahrgestell in Vorwärtsrichtung variieren. Analog kann der Aktor die Fahrtrichtung des Verteilergestänges durch Verstellung des Lenkwinkels des Fahrgestells (und somit des fest oder beweglich daran angebrachten Verteilergestänges) und/oder durch Verstellung der Position des Verteilergestänges um die Hochachse gegenüber dem Fahrgestell variieren.

Wenn die Steuerung eine in Vorwärtsrichtung gerichtete Schwingung des Verteilergestänges (d.h. eine Bewegung zumindest eines Teils des Verteilergestänges um die Hochachse) mittels eines geeigneten Sensors erfasst oder anhand bzw. auf Grund einer durchgeführten oder durchzuführenden Geschwindigkeitsänderung erwartet, steuert sie den Aktor in der Weise an, dass durch eine weitere Geschwindigkeitsänderung eine gegenphasige Schwingung in dem Verteilergestänge induziert wird, die zur Verminderung oder Auslöschung der Schwingung des Verteilergestänges führt. Wenn demnach beispielsweise die Verteilmaschine beschleunigt wird, werden sich die äußeren Enden des Verteilergestänges zunächst aufgrund der Massenträgheit gegenüber dem Fahrgestell nach hinten bewegen und von dort periodisch nach vorn und hinten schwingen. Es ist auch die Anregung von höheren Schwingungsmoden möglich. Diese Schwingung wird durch die Vortriebsgeschwindigkeitsänderung mit einer gegenphasigen Schwingung überlagert und somit ausgelöscht oder gemindert. Es findet demnach nicht nur eine gegenüber einer ursprünglich beabsichtigen Beschleunigung verminderte Beschleunigung des Gestänges statt, wie sie der Stand der Technik nach EP 3 132 682 A1 und DE 10 2015 113 721 A1 vorsieht, sondern durch die Geschwindigkeitsänderung eine die entstehende Schwingung im Verteilergestänge gegenphasig überlagernde, dämpfende Schwingung erzeugt.

Analog kann bei einer Lenkbewegung vorgegangen werden, indem eine entstehende Schwingung im Verteilgestänge gegenphasig überlagert und gedämpft wird.

Die Steuerung kann bei einer möglichen Ausführungsform mit einem Sensor zur Erfassung einer Schwingung des Verteilergestänges verbunden und betreibbar sein, den Aktor basierend auf der erfassten Schwingung anzusteuern. Der Sensor kann ein mit dem Verteilergestänge gekoppelter Trägheitssensor oder ein den Abstand zwischen dem Fahrgestell und dem Verteilergestänge erfassender Sensor sein. Hier findet demnach eine aktive Regelung (mit Rückkopplung) statt, um die Schwingungen des Verteilergestänges zu erfassen und auszulöschen.

Alternativ oder zusätzlich können der Steuerung vordefinierte oder sensorisch ermittelte Informationen hinsichtlich der Reaktion des Verteilergestänges auf eine Beschleunigung und/oder Richtungsänderung des Fahrgestells vorliegen und die Steuerung betreibbar sein, anhand eines ihr zugeführten Signals hinsichtlich einer beabsichtigten Beschleunigung des Fahrgestells und der Informationen den Aktor anzusteuern. Hier ist demnach keine Rückkopplung vorgesehen, sondern eine Steuerung mit offener Schleife, die ggf. auf sensorisch ermittelte Parameter des Verteilergestänges zurückgreifen kann. Die Steuerung kann bei dieser Ausführungsform betreibbar sein, auf einen erhaltenen Stellbefehl zur Änderung der Geschwindigkeit und/oder Richtung des Fahrgestells zunächst ein erstes Stellsignal an den Aktor zu geben und zeitlich darauffolgend ein zweites Stellsignal an den Aktor zu geben, wobei das zweite Stellsignal derart bemessen ist, eine durch das erste Stellsignal im Verteilergestänge induzierte Schwingung des Verteilergestänges in Vorwärtsrichtung auszulöschen, und/oder auf ein sensorisch erfasstes Signal, das auf eine Änderung der Geschwindigkeit und/oder Richtung des Fahrgestells hinweist, ein Stellsignal an den Aktor zu geben, welches derart bemessen ist, eine durch Änderung der Geschwindigkeit und/oder Richtung des Fahrgestells im Verteilergestänge induzierte Schwingung des Verteilergestänges in Vorwärtsrichtung auszulöschen.

Die Steuerung kann betreibbar sein, die auf einen Bediener der Verteilmaschine wirkenden Beschleunigungen zu ermitteln und den Aktor in einer die auf den Bediener wirkenden Beschleunigungen auf einen vorzugsweise vorgebbaren Grenzwert reduzierenden Weise anzusteuern.

Der Aktor kann eingerichtet sein, die Drehzahl eines Antriebsmotors und/oder die Übersetzung eines Fahrgetriebes der Verteilmaschine oder eines sie ziehenden oder tragenden Fahrzeugs zu beeinflussen und/oder das Verteilergestänge gegenüber dem Fahrgestell zu bewegen und/oder eine Masse relativ zum Fahrgestell zu bewegen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer landwirtschaftlichen Verteilmaschine mit einer zugehörigen Steuerung,
- Fig. 2: eine Draufsicht auf die Verteilmaschine,
- Fig. 3: ein Flussdiagramm, nach dem die Steuerung der Verteilmaschine im Betrieb gemäß einer ersten Ausführungsform arbeitet, und
- Fig. 4: ein Flussdiagramm, nach dem die Steuerung der Feldspritze im Betrieb gemäß einer zweiten Ausführungsform arbeitet, und.

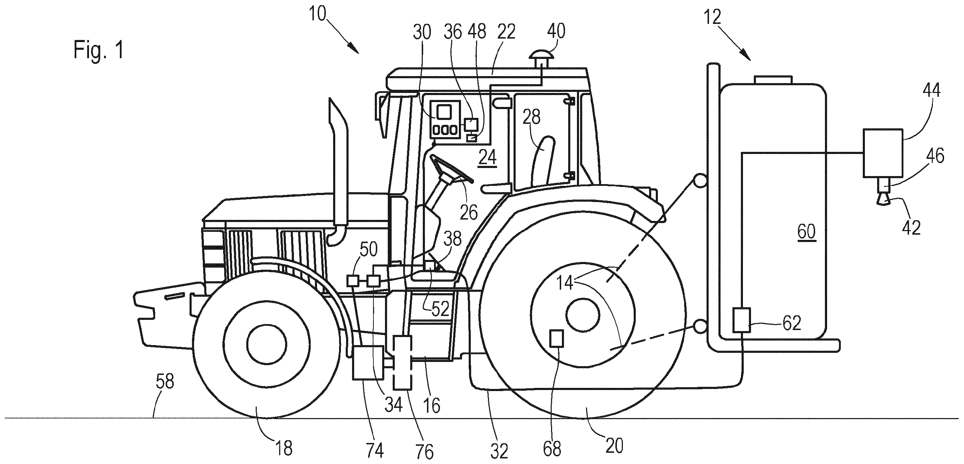

Die Figur 1 zeigt eine seitliche Ansicht einer Verteilmaschine 12 in Form einer Feldspritze, die an einem Dreipunktgestänge 14 eines landwirtschaftlichen Ackerschleppers 10 angebaut ist. Der Ackerschlepper 10 baut sich auf einem tragenden Fahrgestell 16 auf, das sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz 28, Pedale 52 und eine Bedienerschnittstelle 30. Die Verteilmaschine 12 könnte bei einer anderen Ausführungsform durch den Ackerschlepper 10 gezogen werden, d.h. ein Fahrgestell mit Rädern und einer an einer Kupplung des Ackerschleppers 10 angehängte Deichsel umfassen, oder als selbstfahrendes Fahrzeug ausgeführt sein. In diesem Fall würde das Fahrgestell durch das Fahrgestell der Verteilmaschine 12 gebildet werden und ihre Geschwindigkeit durch das Zugfahrzeug oder die Verteilmaschine 12 selbst vorgegeben.

Die Bedienerschnittstelle 30, bei der es sich um ein so genanntes virtuelles Terminal handeln kann, ist mit einer Datenübertragungseinrichtung 32 verbunden, die in der dargestellten Ausführungsform ein serieller Datenbus sein kann. Mit der Datenübertragungseinrichtung 32 sind weiterhin eine Arbeitsfahrzeugsteuerung 34 des Ackerschleppers 10, eine Kontrolleinheit 62 der Verteilmaschine 12 und eine Positionsbestimmungseinrichtung 40 verbunden. Alle erwähnten Einrichtungen tauschen während des Betriebs des Ackerschleppers 10 über die Datenübertragungseinrichtung 32 Botschaften untereinander aus. In der Regel sind weitere Kontrolleinheiten (nicht gezeigt) an der Datenübertragungseinrichtung 32 angeschlossen, die zu so genannten Arbeitsensembles (englisch: Working Sets) zusammengefasst sein können, die gemeinsam mit dem virtuellen Terminal 30 und ggf. anderen Kontrolleinheiten oder Arbeitsensembles über die Datenübertragungseinrichtung 32 kommunizieren. Das hier verwendete Protokoll entspricht vorzugsweise der ISO 11783. Es wäre jedoch auch möglich, die erwähnten Einrichtungen direkt untereinander zu verkabeln und/oder ein beliebiges anderes Protokoll zu verwenden.

Die Positionsbestimmungseinrichtung 40 empfängt Signale von Satelliten und ggf. erdgebundenen Sendern und ermittelt daraus die aktuelle Position des Ackerschleppers 10 in zumindest zwei horizontalen Dimensionen und vorzugsweise auch dessen Geschwindigkeit und Fahrtrichtung. Diese Daten werden über die Datenübertragungseinrichtung 32 u.a. an eine Steuerung 36 übertragen, die in das das virtuelle Terminal 30 integriert ist, jedoch auch davon getrennt sein könnte.

Die Arbeitsfahrzeugsteuerung 34 des Ackerschleppers 10 ist mit einer Geschwindigkeitskontrolleinheit 50 verbunden, welche die Vortriebsgeschwindigkeit des Ackerschleppers 10 vorgibt, indem sie beispielsweise die Drehzahl eines Antriebsmotors 64 des Ackerschleppers 10 und/oder das Übersetzungsverhältnis eines den Antriebsmotor 64 mit den Rädern 20 und ggf. 18 trieblich verbindenden Fahrgetriebes 66 kontrolliert. Das Fahrgetriebe 66 kann ein stufenloses, mechanisches oder hydrostatisches oder elektrisches oder ein hybrides Getriebe sein.

Die Lenkung des Ackerschleppers 10 erfolgt durch den Bediener mittels des Lenkrads 26 oder durch eine selbsttätige, in die Bedienerschnittstelle 30 integrierte, elektronische Lenksteuerung und damit gekoppelte Lenkaktoren, die den Ackerschlepper 10 anhand eines geplanten, in einer Speichereinrichtung 48 der Steuerung 36 abgespeicherten Weges und der Signale der Positionsbestimmungseinrichtung 40 über das Feld 58 führen, insbesondere anhand vorhandener Fahrgassen.

Die Kontrolleinheit 62 der Verteilmaschine 12 ist über die Datenübertragungseinrichtung 32 oder eine separate Verbindung mit Aktoren 46 verbunden, welche jeweils einer als Düse ausgeführten Ausgabeeinrichtung 42 der Verteilmaschine 12 zugeordnet sind und die Rate kontrollieren, mit welcher die Ausgabeeinrichtung 42 Spritzmittel aus einem Vorratsbehälter 60 auf das Feld abgibt. Die Ausgabeeinrichtungen 42 sind an der Verteilmaschine 12 über ein zur Straßenfahrt einfaltbares Verteilergestänge 44 befestigt. Die Ausbringraten der Ausgabeeinrichtungen 42 können ortsspezifisch angesteuert werden, basierend auf den Signalen der Positionsbestimmungseinrichtung 40 und einer in der Speichereinrichtung 48 abgespeicherten Karte des Feldes 58 mit zugehörigen, im Vorab geplanten Sollwerten, die ggf. durch lokale Sensoren ergänzt werden können.

Im Betrieb kann die Lenkung und Geschwindigkeitsvorgabe des Ackerschleppers 10 durch einen Bediener am Bedienerarbeitsplatz 24 mittels des Lenkrads 26 und der Pedale 38 oder eines Fahrhebels erfolgen, der in der Figur 1 nicht gezeigt wird. Alternativ erfolgt die Lenkung durch die Lenksteuerung, basierend auf Signalen von der Steuerung 36, welche auch die Geschwindigkeit des Ackerschleppers über die Übertragungseinrichtung 32, die Arbeitsfahrzeugsteuerung 34 und die Geschwindigkeitskontrolleinheit 50 steuern kann, insofern dies nicht durch den Bediener über die Pedale 38 und/oder den Fahrhebel erfolgt.

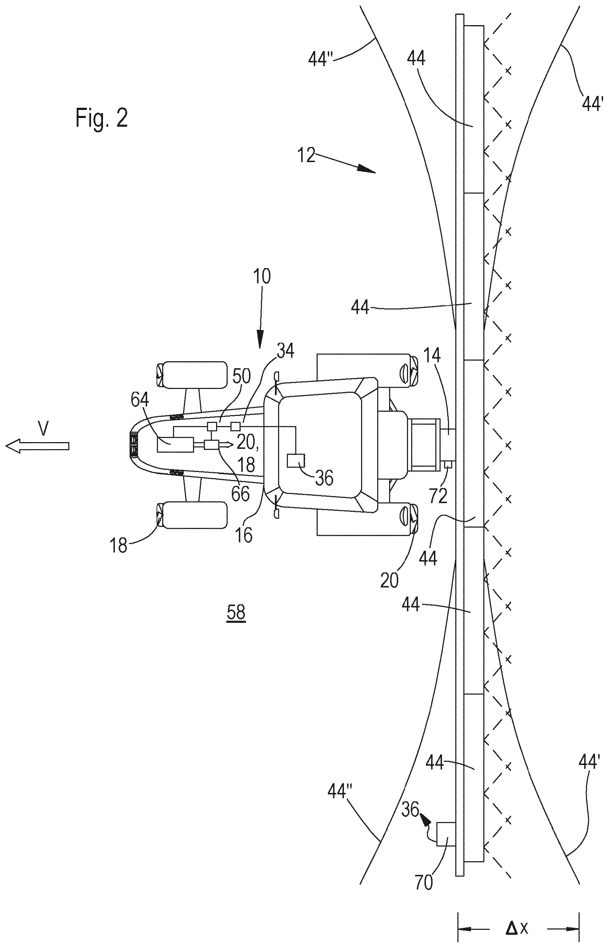

Die Geschwindigkeit der Verteilmaschine 12 in ihrer Vorwärtsrichtung V über das Feld 58 ist demnach nicht unbedingt konstant, denn der Bediener oder die Steuerung 36 können aus unterschiedlichen Gründen die Vortriebsgeschwindigkeit v verändern, z.B. um vor einem Wendevorgang zu verlangsamen und anschließend wieder zu beschleunigen. Auch können Bodenunebenheiten oder-neigungen zu Geschwindigkeitsänderungen des Fahrgestells 16 führen. Die relativ geringe Steifheit des Verteilergestänges 44 in Vorwärtsrichtung V führt dazu, dass seine äußeren Enden beim Beschleunigen gegenüber dem Fahrgestell 16 der Verteilmaschine 12 nach hinten auslenken, wie in der Figur 2 mit dem Bezugszeichen 44' gekennzeichnet, und anschließend Schwingungen zwischen einem vorderen Umkehrpunkt, wie er in der Figur 2 mit dem Bezugszeichen 44" gekennzeichnet ist, und der ursprünglichen rückwärtigen Auslenkung 44' durchführen, deren Amplitude mit der Zeit abnimmt. Auch können derartige Schwingungen durch ein unebenes Bodenprofil des überfahrenen Feldes 58 in das Verteilergestänge 44 induziert werden. Diese Schwingungen führen dazu, dass die gewünschten Verteilmengen lokal nicht eingehalten werden.

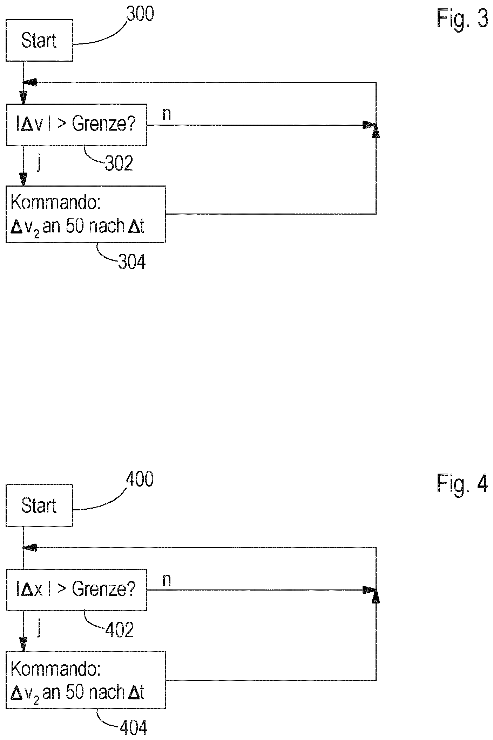

Zwecks Vermeidung dieses Nachteils kann die Steuerung 36 bei einer ersten Ausführungsform nach dem Diagramm der Figur 3 vorgehen. Nach dem Start im Schritt 300 wird im Schritt 302 abgefragt, ob eine Geschwindigkeitsänderung Δv (pro Zeiteinheit) vorliegt. Diese Geschwindigkeitsänderung kann (insbesondere bei manueller Vorgabe der Geschwindigkeit v des Ackerschleppers 10) durch einen Bediener mittels eines Sensors 68 abgefragt werden, der die Drehzahl eines der Räder 18, 20 oder die Geschwindigkeit des Ackerschleppers 10 über dem Boden erfasst, wozu z.B. ein Radarsensor dienen kann. Bei selbsttätiger Geschwindigkeitskontrolle durch die Steuerung 36 kann diese die Geschwindigkeitsänderung Δv (pro Zeiteinheit) selbst ermitteln. Findet keine (bzw. eine mit ihrem Betrag unterhalb eines Grenzwerts, der nicht zu einer unerwünschten Bewegung des Verteilergestänges 44 liegenden Schwingung führen wird) Geschwindigkeitsänderung je Zeiteinheit statt, folgt wieder der Schritt 302. Anderenfalls folgt der Schritt 304, in dem die Steuerung 36 über die Datenübertragungseinrichtung 32 eine Anweisung an die Arbeitsfahrzeugsteuerung 34 übersendet, die aktuelle Vortriebsgeschwindigkeit v nach einer Zeit Δt um einen Wert Δv₂ mit einer vorgegebenen Beschleunigung zu verändern. Die Arbeitsfahrzeugsteuerung 34 kontrolliert daraufhin einen Aktor des Verbrennungsmotors 64 und/oder des Fahrgetriebes 66 derart, dass sich die kommandierte Geschwindigkeitsänderung Δv₂ ergibt. Hierbei kann es sich um eine Verzögerung oder Beschleunigung handeln, die derart gewählt wird, dass ein Impuls auf den Ackerschlepper 10 und somit auf die starr damit verbundene Verteilmaschine 12 ausgeübt wird, welcher dazu führt, dass sich die bisher vorhandene Schwingung mit der durch den neuen Impuls induzierten Schwingung im Verteilgestänge 44 nahezu oder komplett auslöscht. Hierzu sei auf die Offenbarungen der DE 10 2014 203 005 B3 und der DE 10 2015 205 905 A1 verwiesen, die durch Verweis mit in die vorliegenden Unterlagen aufgenommen wird. Auf den Schritt 304 folgt wieder der Schritt 302.

Die korrekte Wahl der Geschwindigkeitsänderung Δv₂ und der Zeit Δt im Schritt 304 erfordert hinreichende Kenntnisse der Reaktion des Verteilergestänges 44 auf eine Geschwindigkeitsänderung Δv. Diese können anhand von theoretischen Berechnungen und/oder Versuchen an einer Verteilmaschine 12 des jeweils verwendeten Typs ermittelt und in die Speichereinrichtung 48 der Steuerung 36 einprogrammiert werden, d.h. die Steuerung 36 erkennt anhand des ihr über die Datenübertragungseinrichtung 32 zugeführten, in einem Speicher der Kontrolleinheit 62 abgespeicherten Information hinsichtlich der Bauart der Verteilmaschine 12 die erwähnten Zusammenhänge und steuert die Arbeitsfahrzeugsteuerung 34 entsprechend an. Alternativ oder zusätzlich kann das Schwingverhalten des Verteilergestänges 44 einmalig oder von Zeit zu Zeit bei einem Testdurchlauf, bei dem durch die Steuerung 36 unterschiedliche Geschwindigkeiten des Fahrgestells 16 angesteuert werden, mittels eines Sensors 70 ermittelt werden, welcher am Verteilergestänge 44 angebracht ist und dessen Schwingverhalten erfasst. Der Sensor 70 kann als Trägheitssensor ausgeführt werden und in Verbindung mit den Signalen eines weiteren, am fest mit dem Ackerschlepper 12 verbundenen Teil der Verteilmaschine 12 oder am Ackerschlepper 10 befestigten Sensor 70, der ebenfalls ein Trägheitssensor sein kann, dazu dienen, die aktuelle Auslenkung des Verteilergestänges 44 zu ermitteln. Die Sensoren 70, 72 können auch auf beliebige andere Weise die aktuelle Auslenkung des Verteilergestänges 44 ermitteln, z.B. durch Entfernungsmessung. In Verbindung mit vorbestimmten oder durch den Bediener vorgenommenen Geschwindigkeitsänderungen des Ackerschleppers 10 kann demnach die Steuerung 36 die besagten Kenntnisse der Reaktion des Verteilergestänges 44 auf eine Geschwindigkeitsänderung Δv ermitteln und daraus Regelparameter für die Steuerung 36 ableiten.

Bei der alternativ oder zusätzlich anwendbaren Vorgehensweise nach Figur 4 wird nach dem Start im Schritt 400 im Schritt 402 abgefragt, ob eine Auslenkung Δx (vgl. Figur 2) des Verteilergestänges 44 in Vorwärtsrichtung V vorliegt. Diese Auslenkung kann anhand der im vorhergehenden Absatz erwähnten Sensoren 70 und ggf. 72 erfasst werden. Findet keine (bzw. eine mit ihrem Betrag unterhalb eines Grenzwerts, der nicht zu einer unerwünschten Bewegung des Verteilergestänges 44 liegenden Schwingung führen wird) Auslenkung des Verteilergestänges 44 in Vorwärtsrichtung V statt, folgt wieder der Schritt 402. Anderenfalls folgt der Schritt 404, in dem die Steuerung 36 über die Datenübertragungseinrichtung 32 eine Anweisung an die Arbeitsfahrzeugsteuerung 34 übersendet, die aktuelle Vortriebsgeschwindigkeit v nach einer Zeit Δt um einen Wert Δv₂ mit einer vorgegebenen Beschleunigung zu verändern. Hierbei kann es sich um eine Verzögerung oder Beschleunigung handeln, die derart gewählt wird, dass ein Impuls auf den Ackerschlepper 10 und somit auf die starr damit verbundene Verteilmaschine 12 ausgeübt wird, welcher dazu führt, dass sich die bisher vorhandene Schwingung des Verteilergestänges 44, die zu Auslenkung Δx geführt hat, mit der durch den neuen Impuls induzierten Schwingung im Verteilgestänge nahezu oder komplett auslöscht. Hierbei kann wie in den beiden vorhergehenden Absätzen vorgegangen werden.

Es sei noch angemerkt, dass verschiedene Modifikationen der gezeigten Ausführungsformen möglich sind. So könnte in den Schritten 304 und 404 ermittelt werden, welche Beschleunigung auf den Bediener der Verteilmaschine 12 wirkt und, falls der Betrag der Beschleunigung einen Grenzwert überschreitet, eine kleinere Beschleunigung gewählt werden oder die Schritte 304 oder 404 mehrmals mit kleinerer Beschleunigung durchlaufen werden.

Die bezüglich der Figuren 2 bis 4 beschriebene Problematik tritt auch dann auf, wenn das Fahrgestell 16 der Feldspritze 12 eine Richtungsänderung durchführt. Wenn das Fahrgestell 16 z.B. nach rechts gelenkt wird, erfahren die äußeren Enden des Verteilergestänges 44 eine Beschleunigung nach hinten (rechte Seite) oder vorn (linke Seite), die aufgrund der Flexibilität des Verteilergestänges 44 zu gegenphasigen Schwingungen der beiden Hälften des Verteilergestänges 44 führt. Durch eine der Geschwindigkeitsänderung der Figur 3 oder 4 analoge Lenkbewegung kann eine zweite Schwingung erzeugt werden, welche die erste Schwingung auslöscht. Man kann somit bei selbsttätiger Lenkung der Verteilmaschine 12 in der oben beschriebenen Weise die Lenkbewegung in zwei Phasen aufteilen, bei denen die erste Lenkbewegung die beschriebene Schwingung erzeugt und die zweite Lenkbewegung sie wieder auslöscht. Bei geschickter Zeitabstimmung (Phasenwahl Δt) kann man die beiden Lenkbewegungen in dieselbe Richtung laufen lassen, sodass kein unnötiges übermäßiges Lenken erforderlich wird.

Während das Verteilergestänge 44 in den Figuren 1 und 2 als starr am Fahrgestell 16 befestigt gezeigt wird, könnte es durch einen nicht gezeigten Verstelltrieb (wie in DE 10 2015 113 721 A1) in Vorwärtsrichtung beweglich am Fahrgestell angebracht werden. Die in den Figuren 3 und 4 beschriebenen Geschwindigkeitsänderungen könnten (alternativ oder zusätzlich zur dort gezeigten Geschwindigkeitsänderung des Fahrgestells 16) durch diesen Verstelltrieb erzeugt werden. Analog könnte auch der Ausgleich der Schwingung des Verteilergestänges um die Hochachse beim Lenken, wie er im vorigen Absatz beschrieben wurde, alternativ oder zusätzlich zur dort gezeigten Richtungsänderung des Fahrgestells 16 durch einen Verstelltrieb ausgeglichen werden, der das Verteilergestänge 44 (wie in EP 3 132 682 A1) gegenüber dem Fahrgestell um die Hochachse verstellt.

Schließlich könnte die in den Schritten 304 und 404 bewerkstelligte Geschwindigkeitsänderung des Fahrgestells 16 zusätzlich oder alternativ zur Verstellung der Drehzahl des Antriebsmotors 64 und der Übersetzung des Fahrgetriebes 66 mittels einer in Fahrtrichtung verschiebbaren Masse 76 erfolgen, die mittels eines Verstellantriebes 74 nach hinten oder vorn verschoben wird.

## Patentansprüche

1. Landwirtschaftliche Verteilmaschine (12) mit:
einem Verteilergestänge (44),
einem sich auf dem Boden abstützenden, in eine Vorwärtsrichtung in Bewegung setzbaren Fahrgestell (16), an dem das Verteilergestänge (44) befestigt ist, wobei das Verteilergestänge (44) eine quer zur Vorwärtsrichtung gemessene Breite aufweist, die ein Vielfaches der Transportbreite der Verteilmaschine (12) ist, und
einer elektronischen Steuerung (36), die betreibbar ist, einen die Vortriebsgeschwindigkeit (v) und/oder Fahrtrichtung des Fahrgestells (16) und/oder des Verteilergestänges (44) beeinflussenden Aktor im Sinne einer Minderung einer in Vorwärtsrichtung gerichteten Schwingung des Verteilergestänges (44) anzusteuern,
**dadurch gekennzeichnet, dass** die Steuerung (36) eingerichtet ist, den Aktor in Reaktion auf eine erfasste oder erwartete Schwingung des Verteilergestänges (44) derart anzusteuern, dass durch die resultierende Geschwindigkeitsänderung (Δv₂) und/oder Fahrtrichtungsänderung des Fahrgestells (16) und/oder Verteilergestänges (44) eine zur erfassten oder erwarteten Schwingung des Verteilergestänges (44) gegenphasige Schwingung in dem Verteilergestänge (44) induziert wird, die zur Verminderung oder Auslöschung der Schwingung des Verteilergestänges (44) führt.

2. Verteilmaschine (12) nach Anspruch 1, wobei die Steuerung (36) mit einem Sensor (70, 72) zur Erfassung einer Schwingung des Verteilergestänges (44) verbunden und betreibbar ist, den Aktor basierend auf der erfassten Schwingung anzusteuern.

3. Verteilmaschine (12) nach Anspruch 2, wobei der Sensor (70, 72) ein mit dem Verteilergestänge (44) gekoppelter Trägheitssensor oder ein den Abstand zwischen dem Fahrgestell (16) und dem Verteilergestänge (44) erfassender Sensor (72) ist.

4. Verteilmaschine (12) nach einem der Ansprüche 1 bis 3, wobei der Steuerung (36) vordefinierte oder sensorisch ermittelte Informationen hinsichtlich der Reaktion des Verteilergestänges (44) auf eine Beschleunigung und/oder Richtungsänderung des Fahrgestells (16) vorliegen und die Steuerung (36) anhand eines ihr zugeführten Signals hinsichtlich einer beabsichtigten Beschleunigung des Fahrgestells (16) und der Informationen betreibbar ist, den Aktor anzusteuern.

5. Verteilmaschine (12) nach Anspruch 4, wobei die Steuerung (36) betreibbar ist, auf einen erhaltenen Stellbefehl zur Änderung der Geschwindigkeit und/oder Richtung des Fahrgestells (16) hin zunächst ein erstes Stellsignal an den Aktor zu geben und zeitlich darauffolgend ein zweites Stellsignal an den Aktor zu geben, wobei das zweite Stellsignal derart bemessen ist, eine durch das erste Stellsignal im Verteilergestänge (44) induzierte Schwingung des Verteilergestänges in Vorwärtsrichtung auszulöschen.

6. Verteilmaschine (12) nach Anspruch 4 oder 5, wobei die Steuerung (36) betreibbar ist, auf ein sensorisch erfasstes Signal, das auf eine Änderung der Geschwindigkeit und/oder Richtung des Fahrgestells (16) hinweist, ein Stellsignal an den Aktor zu geben, welches derart bemessen ist, eine durch Änderung der Geschwindigkeit und/oder Richtung des Fahrgestells (16) im Verteilergestänge (44) induzierte Schwingung des Verteilergestänges (44) in Vorwärtsrichtung (V) auszulöschen.

7. Verteilmaschine (12) nach einem der vorhergehenden Ansprüche, wobei die Steuerung (36) betreibbar ist, die auf einen Bediener der Verteilmaschine (12) wirkenden Beschleunigungen zu ermitteln und den Aktor in einer die auf den Bediener wirkenden Beschleunigungen auf einen vorzugsweise vorgebbaren Grenzwert reduzierenden Weise anzusteuern.

8. Verteilmaschine (12) nach einem der vorhergehenden Ansprüche, wobei der Aktor eingerichtet ist, die Drehzahl eines Antriebsmotors (64) und/oder die Übersetzung eines Fahrgetriebes (66) der Verteilmaschine (12) oder eines sie ziehenden oder tragenden Fahrzeugs zu beeinflussen und/oder das Verteilergestänge (44) gegenüber dem Fahrgestell (16) zu bewegen und/oder eine Masse relativ zum Fahrgestell zu bewegen.

9. Verfahren zum Betreiben einer landwirtschaftlichen Verteilmaschine (12), welche mit:
einem Verteilergestänge (44),
einem sich auf dem Boden abstützenden, in eine Vorwärtsrichtung in Bewegung setzbaren Fahrgestell (16), welches das Verteilergestänge (44) trägt, wobei das Verteilergestänge (44) eine quer zur Vorwärtsrichtung (V) gemessene Breite aufweist, die ein Vielfaches der Transportbreite der Verteilmaschine (12) ist, und
einer elektronischen Steuerung (36) ausgestattet ist, wobei die Steuerung (36) die Vortriebsgeschwindigkeit (v) und/oder Fahrtrichtung des Fahrgestells (16) und/oder des Verteilergestänges (44) beeinflussenden Aktor im Sinne einer Minderung einer in Vorwärtsrichtung gerichteten Schwingung des Verteilergestänges (44) ansteuert,
**dadurch gekennzeichnet, dass** die Steuerung (36) den Aktor in Reaktion auf eine erfasste oder erwartete Schwingung des Verteilergestänges (44) derart ansteuert, dass durch die resultierende Geschwindigkeitsänderung und/oder Fahrtrichtungsänderung des Fahrgestells (16) und/oder Verteilergestänges (44) eine zur erfassten oder erwarteten Schwingung des Verteilergestänges (44) gegenphasige Schwingung in dem Verteilergestänge (44) induziert wird, die zur Verminderung oder Auslöschung der Schwingung des Verteilergestänges (44)führt.

## Claims

1. Agricultural distribution machine (12) having:
a distributor boom (44),
a chassis (16) which is supported on the ground, is able to be set in motion in a forward direction and to which the distributor boom (44) is fastened, wherein the distributor boom (44) has a width measured transversely to the forward direction, said width being a multiple of the transport width of the distribution machine (12), and
an electronic controller (36), which is operable to actuate an actuator, influencing the advancing speed (v) and/or direction of travel of the chassis (16) and/or of the distributor boom (44), in order to reduce a vibration, directed in the forward direction, of the distributor boom (44),
**characterized in that** the controller (36) is set up to actuate the actuator in reaction to a sensed or expected vibration of the distributor boom (44) in such a way that, as a result of the resultant change in speed (Δv₂) and/or change in direction of travel of the chassis (16) and/or distributor boom (44), a vibration of opposite phase to the sensed or expected vibration of the distributor boom (44) is induced in the distributor boom (44), this causing the vibration of the distributor boom (44) to be reduced or eliminated.

2. Distribution machine (12) according to Claim 1, wherein the controller (36) is connected to a sensor (70, 72) for sensing a vibration of the distributor boom (44) and is operable to actuate the actuator on the basis of the sensed vibration.

3. Distribution machine (12) according to Claim 2, wherein the sensor (70, 72) is an inertial sensor coupled to the distributor boom (44) or a sensor (72) that senses the distance between the chassis (16) and the distributor boom (44).

4. Distribution machine (12) according to one of Claims 1 to 3, wherein the controller (36) is provided with predefined or sensor-determined information relating to the reaction of the distributor boom (44) to an acceleration and/or change in direction of the chassis (16), and the controller (36) is operable to actuate the actuator on the basis of a signal, supplied to said controller (36), relating to an intended acceleration of the chassis (16) and the information.

5. Distribution machine (12) according to Claim 4, wherein the controller (36) is operable, in response to a received control command to change the speed and/or direction of the chassis (16), to first of all send a first control signal to the actuator and subsequently to send a second control signal to the actuator, wherein the second control signal is designed to eliminate a vibration of the distributor boom in the forward direction, said vibration being induced in the distributor boom (44) by the first control signal.

6. Distribution machine (12) according to Claim 4 or 5, wherein the controller (36) is operable, in response to a signal, picked up by a sensor, that indicates a change in the speed and/or direction of the chassis (16), to send a control signal to the actuator, said control signal being designed to eliminate a vibration of the distributor boom (44) in the forward direction (V), said vibration being induced in the distributor boom (44) by a change in speed and/or direction of the chassis (16).

7. Distribution machine (12) according to one of the preceding claims, wherein the controller (36) is operable to determine the accelerations acting on an operator of the distribution machine (12) and to actuate the actuator in such a manner as to reduce the accelerations acting on the operator to a preferably predefinable limit value.

8. Distribution machine (12) according to one of the preceding claims, wherein the actuator is set up to influence the speed of a drive motor (64) and/or the transmission ratio of a gearbox (66) of the distribution machine (12) or of a vehicle towing or carrying it and/or to move the distributor boom (44) with respect to the chassis (16) and/or to move a mass relative to the chassis.

9. Method for operating an agricultural distribution machine (12), which is equipped with:
a distributor boom (44),
a chassis (16) which is supported on the ground, is able to be set in motion in a forward direction and carries the distributor boom (44), wherein the distributor boom (44) has a width measured transversely to the forward direction (V), said width being a multiple of the transport width of the distribution machine (12), and
an electronic controller (36), wherein the controller (36) actuates an actuator, influencing the advancing speed (v) and/or direction of travel of the chassis (16) and/or of the distributor boom (44), in order to reduce a vibration, directed in the forward direction, of the distributor boom (44),
**characterized in that** the controller (36) actuates the actuator in reaction to a sensed or expected vibration of the distributor boom (44) in such a way that, as a result of the resultant change in speed and/or change in direction of travel of the chassis (16) and/or distributor boom (44), a vibration of opposite phase to the sensed or expected vibration of the distributor boom (44) is induced in the distributor boom (44), this causing the vibration of the distributor boom (44) to be reduced or eliminated.

## Revendications

1. Machine d'épandage agricole (12) comprenant :
un ensemble de tiges d'épandage (44),
un mécanisme de roulement (16) qui s'appuie sur le sol, qui peut être déplacé dans un sens d'avancement et auquel est fixé l'ensemble de tiges d'épandage (44), l'ensemble de tiges d'épandage (44) ayant une largeur, mesurée transversalement au sens d'avancement, qui est un multiple de la largeur de transport de la machine d'épandage (12), et
une commande électronique (36) qui peut être utilisée pour commander un actionneur, influant sur la vitesse de propulsion (v) et/ou sur la direction de roulement du mécanisme de roulement (16) et/ou sur l'ensemble de tiges d'épandage (44), afin de réduire une vibration, orientée dans le sens d'avancement, de l'ensemble de tiges d'épandage (44),
**caractérisée en ce que** la commande (36) est adaptée pour commander l'actionneur en réponse à une vibration détectée ou attendue de l'ensemble de tiges d'épandage (44) de telle sorte que le changement de vitesse (Δv₂) et/ou de direction de déplacement résultant du mécanisme de roulement (16) et/ou de l'ensemble de tiges d'épandage (44) induit une vibration de l'ensemble de tiges d'épandage (44) qui est en opposition de phase avec la vibration détectée ou attendue de l'ensemble de tiges d'épandage (44), ce qui conduit à une réduction ou une suppression de la vibration de l'ensemble de tiges d'épandage (44).

2. Machine d'épandage (12) selon la revendication 1, la commande (36) étant reliée à un capteur (70, 72) destiné à détecter une vibration de l'ensemble de tiges d'épandage (44) et pouvant être utilisée pour commander l'actionneur sur la base de la vibration détectée.

3. Machine d'épandage (12) selon la revendication 2, le capteur (70, 72) étant un capteur d'inertie accouplé à l'ensemble de tiges d'épandage (44) ou un capteur (72) qui détecte la distance entre le mécanisme de roulement (16) et l'ensemble de tiges d'épandage (44).

4. Machine d'épandage (12) selon l'une des revendications 1 à 3, la commande (36) comportant des informations prédéfinies ou déterminées par capteur sur la réaction de l'ensemble de tiges d'épandage (44) à une accélération et/ou un changement de direction du mécanisme de roulement (16) et la commande (36) étant utilisée pour commander l'actionneur sur la base d'un signal qui lui est fourni concernant une accélération prévue du mécanisme de roulement (16) et sur la base des informations.

5. Machine d'épandage (12) selon la revendication 4, la commande (36) pouvant être utilisée pour délivrer d'abord un premier signal de commande à l'actionneur en réponse à une instruction de commande reçue pour effectuer un changement de vitesse et/ou de direction du mécanisme de roulement (16) puis pour délivrer un deuxième signal de commande à l'actionneur, le deuxième signal de commande étant dimensionné de manière à supprimer une vibration de l'ensemble de tiges d'épandage dans le sens d'avancement qui est induite par le premier signal de commande dans l'ensemble de tiges d'épandage (44).

6. Machine d'épandage (12) selon la revendication 4 ou 5, la commande (36) pouvant être utilisée pour délivrer à l'actionneur, en réponse à un signal détecté par capteur qui indique un changement de vitesse et/ou de direction du mécanisme de roulement (16), un signal de commande qui est dimensionné de manière à supprimer dans l'ensemble de tiges d'épandage (44) une vibration de l'ensemble de tiges d'épandage (44) dans le sens d'avancement (V) qui est induite par un changement de vitesse et/ou de direction du mécanisme de roulement (16) .

7. Machine d'épandage (12) selon l'une des revendications précédentes, la commande (36) pouvant être utilisée pour déterminer les accélérations agissant sur un opérateur de la machine d'épandage (12) et pour commander l'actionneur de manière à réduire les accélérations, agissant sur l'opérateur, à une valeur limite de préférence prédéterminable.

8. Machine d'épandage (12) selon l'une des revendications précédentes, l'actionneur étant conçu pour influer sur la vitesse de rotation d'un moteur d'entraînement (64) et/ou sur le rapport de vitesse d'une boîte de vitesses (66) de la machine d'épandage (12) ou d'un véhicule tractant ou portant celle-ci et/ou pour déplacer l'ensemble de tiges d'épandage (44) par rapport au mécanisme de roulement (16) et/ou pour déplacer une masse par rapport au mécanisme de roulement.

9. Procédé de fonctionnement d'une machine d'épandage agricole (12) qui est équipée :
d'un ensemble de tiges d'épandage (44),
d'un mécanisme de roulement (16) qui est en appui sur le sol, qui peut être déplacé dans le sens d'avancement et qui porte l'ensemble de tiges d'épandage (44), l'ensemble de tiges d'épandage (44) ayant une largeur, mesurée transversalement au sens d'avancement (V), qui est un multiple de la largeur de transport de la machine d'épandage (12), et
d'une commande électronique (36), la commande (36) commandant l'actionneur, influant sur la vitesse de propulsion (v) et/ou la direction de déplacement du mécanisme de roulement (16) et/ou de l'ensemble de tiges d'épandage (44), afin de réduire une vibration, orientée dans le sens d'avancement, de l'ensemble de tiges d'épandage (44),
**caractérisé en ce que** la commande (36) commande l'actionneur en réponse à une vibration détectée ou attendue de l'ensemble de tiges d'épandage (44) de manière que le changement de vitesse et/ou de direction de déplacement résultant du mécanisme de roulement (16) et/ou de l'ensemble de tiges d'épandage (44) induit une vibration dans l'ensemble de tiges d'épandage (44) qui est en opposition de phase avec la vibration détectée ou attendue de l'ensemble de tiges d'épandage (44), ce qui entraîne la réduction ou la suppression de la vibration de l'ensemble de tiges d'épandage (44).
